# EUROPEAN PATENT APPLICATION

(11) **EP 1 953 087 A1**
(43) Date of publication of application: **06.08.2008**
(21) Application number: 07290138.2
(22) Date of filing: 02.02.2007
(51) Int. Cl.: B65B 1/12, B65B 37/10, B65G 65/46

(54) **Powder-metering device, and filling system incorporating the powder-metering device**

(71) Applicant: Mettler-Toledo Flexilab SAS, 77090 Collegien (FR)
(72) Inventor: Fontaine, Ivan-William, 93330 Neuilly-sur-Marne (FR); Plier, Didier, 77515 Hautefeuille (FR)
(74) Representative: Schilling, Doris

(57) **Abstract**

A powder-metering device (1) with a holding container (2) and a metering head (3) is equipped with a discharge feeder element (8) that rotates on a vertical shaft (14) with a central longitudinal axis (9). The metering head (3) has a recirculating device (10) which also rotates about the central longitudinal axis (9) and thereby introduces a flow pattern (R) in the powder in the metering head (3), so that powder which is not expelled by the discharge feeder element (8) through a discharge orifice (5) at the bottom of the metering head (3) is directed radially outward and upward on a circulatory path (R) that returns the same powder for a new approach to the discharge feeder element (8).

## Description

The present invention relates to a device for accurately metering small doses of substances of a powdery consistency, and it relates to a powder-filling system that incorporates the inventive powder-metering device.

In chemical and pharmaceutical laboratories, it is often necessary to dispense reagents or products in powder form, in particular to prepare samples of powder combinations for serial tests. With a large number of powdered products to be tested, the successive dispensing and weighing of powder doses represents a painstaking task which requires a considerable amount of time and attention from the staff involved. Thus, there is a strong need for metering devices that would allow this activity to be at least partially automated.

In industrial production applications there are filling and packaging machines for powdery materials which automatically perform the same filling operation thousands of times. A critical component in each of these machines is the metering device or metering head which must perform its function with the highest degree of reliability and efficiency.

Metering devices of the kind that this invention relates to have a holding container for the powder to be dispensed and, attached to the holding container, a metering head with a discharge orifice. In the working position of the metering device, the holding container is on top and the metering head at the bottom, so that the powder runs in a controlled stream from the discharge orifice into a receiving container.

In the kind of metering device that is envisaged by the present invention, the size of the powder samples being metered out is typically in the range from 0.5 milligrams to 5 grams. Especially for small samples, the precision required is ±0.1 mg or even less.

Some powders will run easily in an even stream out of a small orifice, comparable to the sand in an hourglass. In this case, the powder flow can indeed be controlled simply by varying the cross section of the orifice with an appropriate shutter device. However, in many powdery materials the particles have a tendency to stick together which is known as cohesion, and the powder may also have a degree of volume compressibility, so that the material can become compacted and, as a result, clog up the discharge orifice or leave the orifice in lumps rather than in an easy-flowing fine stream. As a typical example, corn starch exhibits cohesion as well as compactibility to a very high degree and is therefore often used as a test material to evaluate the capabilities of powder-metering apparatus.

The problems that the cohesion and compactibility - often simply referred to as "stickiness" - of powders causes in powder-metering devices has long been known and numerous solutions have been proposed, including for example:

Archimedean feed screws to move the powder material to and expel it from the discharge orifice; stirring and scraping devices to loosen the powder, to scrape it off the walls of the container and metering head and off the feed screw and to collapse bridges and cavities that can form in the powder inside the holding container and metering head; tapping and vibrating devices serving likewise to loosen the powder as well as keep it from adhering to the walls of the container and metering head.

To evaluate and compare the capabilities of state-of-the-art powder-metering devices as well as of the device of the present invention, the applicant has developed a rating scale for the stickiness of powders, wherein a free-flowing powder (as the aforementioned sand in an hourglass) is assigned a numerical grade of 1 and cornstarch is assigned a grade between 7 and 8. When the same cornstarch was used over and over again in the tests conducted by the applicant, the stickiness increased gradually from 7 to 8 as the material absorbed humidity from the air and/or when the powder grains were crushed by the feeding, stirring and scraping elements in the metering devices.

A powder-dispensing device disclosed in GB 701,572 has a cylindrical hopper with a conical, funnel-shaped bottom portion. A vertically oriented Archimedean feed screw extends downward through the discharge passage of the funnel. A stirrer/scraper arm moves concentrically, but with the opposite sense of rotation, about the feed screw shaft, thereby stirring the powder in the holding container as well as scraping powder off the feed screw and the funnel wall.

Another powder-dispensing device, which is disclosed in F 2 607 794, has a funnel-shaped hopper. The discharge orifice at the bottom of the hopper has a plunger valve with a plunger shaft descending vertically from an actuating mechanism above the hopper. A helix-shaped feeder snake is arranged to rotate concentrically about the plunger shaft with a slight clearance from the latter.

In the two foregoing examples and also in general, the use of Archimedean screws for cohesive and compactable powders can be problematic in that the helicoidal grooves of the screw can become firmly clogged with powder so that the Archimedean screw and the powder in its grooves rotate together as a solid cylinder and, as a result, no powder comes out of the discharge orifice.

As a further example of the prior art, a dosage-dispensing device which is disclosed in DE 198 41 478 A1 has a cylindrical hopper with a funnel-shaped bottom. The discharge orifice has a shutter in the form of a plunger valve with a plunger shaft descending vertically from an actuating mechanism above the hopper. A stirrer/scraper device with three arms moves concentrically about the plunger shaft, thereby stirring the powder in the holding container as well as scraping powder off the plunger and the funnel wall. Analogous to the foregoing examples, there is again the possible problem that the powder in the hopper, particularly in the funnel-shaped bottom part, may become compacted into a cohesive mass that simply rotates inside the hopper together with the stirrer/scraper device.

A solution to the aforementioned problems has previously been proposed in US 2006/0011653 A1 by the applicants of the present invention. A device for metering powder quantities in the range from milligrams to a few grams with an accuracy of the order of one-tenth of a milligram has a holding container with a conically narrowing bottom portion and a discharge orifice with a shutter valve to regulate the powder flow. The device includes means for vibrating and/or tapping the container, and may further include a rotary stirring device which may in addition move back and forth in the direction of its axis. As a result, the powder will drop through the orifice under its own gravity without the use of an Archimedean feed screw.

For powders that are not too cohesive and compactable, the last-mentioned powder-metering device with at least one of the means for vibrating, tapping, rotary stirring, and up/down motion of the stirrer shows the desired capability for metering powder quantities in the milligram-to-gram range with an accuracy of the order of one-tenth of a milligram or less. However, its performance still fell short in tests with corn starch which, as mentioned above, is often used as a test material to evaluate powder-metering devices for their capability to handle very compactable and cohesive powders.

In evaluating the state of the art of powder-metering devices, applicant found that different designs are used for powders with different flow properties and/or for different dosage quantities and/or for different precision requirements. This leads to the further conclusion that there is an unmet need for a design concept where the same metering device has the ability to dispense any powder from free-flowing sand to a sticky and clogging material such as cornstarch, i.e. from grade 1 to grade 8 on the aforementioned rating scale for the stickiness of powders, in dosage quantities from under a milligram to 5 grams and over, and with a precision better than one-tenth of a milligram.

It is therefore the object of the present invention to provide a further improved powder-metering device that is capable of metering powder quantities in the range from about 0.5 milligrams to 5 grams with an accuracy of the order of one-tenth of a milligram or less for powders that cover the full range from free-flowing (comparable to hourglass sand) to highly cohesive and clogging (for example cornstarch).

According to the invention, the foregoing objective is met by a powder-metering device with a holding container and, permanently or releasably connected to the latter, a metering head which has a housing with a discharge orifice. The metering head is equipped with a discharge feeder element which is arranged on the central longitudinal axis of the metering head and which is rotatable in relation to the housing about the central longitudinal axis. In particular, the metering head in the powder-metering device according to the invention is equipped with a recirculating device as described hereinafter in more detail, which rotates about the central longitudinal axis and introduces a flow pattern in the powder in the metering head so that powder which is not expelled by the discharge feeder element through the discharge orifice is directed radially outward and upward from the discharge orifice on a circulatory path that returns the same powder for a new approach to the discharge feeder element.

By extensive experimentation, the applicant discovered that an effective degree of circulation can be achieved with a recirculating device which has at least one first stirrer element configured substantially as a thin rod or pin that extends parallel to the central longitudinal axis at a narrow distance essentially along the entire length of the discharge feeder element, so that in its rotation about the central longitudinal axis, the first stirrer element sweeps a cylindrical space surrounding the discharge feeder element.

In preferred embodiments of the invention, the distance of the first stirrer element from the discharge feeder element is substantially in a range between 0.5 and 2 millimeters.

As the applicant found through experiments, when the same metering head is operated without the inventive recirculating device which has at least one first stirrer element, powder will be compacted and become stuck to the discharge feeder element, so that the compacted powder will rotate together with the discharge feeder element as a solid cylindrical mass and no powder will be discharged from the discharge orifice. The inventive device was found to eliminate or at least substantially reduce the tendency of powder to become compacted and stuck to the feeder element. Based on the inventor's experiments, it was found that this beneficial effect of the inventive device could be attributed to the circulatory flow pattern described above, and the device is therefore referred to herein by the term recirculating device.

In a preferred embodiment of the inventive powder-metering device, the recirculating device is arranged on a shaft which connects the discharge feeder element to a drive source. The recirculating device can be rigidly connected to the shaft so that the recirculating device rotates together with the discharge feeder element. Alternatively, the recirculating device can be arranged to rotate about the shaft at a rate and/or sense of rotation different from the discharge feeder element. In either case, the rates of rotation for the discharge feeder and the recirculating element can be fixed or variable from 0 rpm to about 200 rpm.

In a further preferred embodiment of the inventive powder-metering device, the recirculating device has at least one second stirrer element which rotates together with the first stirrer element about the central longitudinal axis. The second stirrer element is likewise configured as a thin rod or pin that extends substantially parallel along the discharge feeder element, but on the diametrically opposite side and at a larger distance than the first stirrer element. At its free end, the second stirrer element may be angled radially inwards towards the discharge feeder element, so that the free end of the second stirrer element conforms substantially to the angle of the conical internal housing wall of the metering head.

Alternatively or in addition to the first and/or second stirrer elements, the recirculating device in further preferred embodiments of the invention can include a wiper element configured substantially like a windshield wiper blade, which conforms to the cone angle of the inner surface of the metering head and is fixedly connected by a connector arm to the axle of the discharge feeder element so as to share in the rotation of the latter and wipe the inner surface of the metering head.

In addition to the wiper element, the recirculating device in further preferred embodiments of the invention can also include a loosening element configured as a rod that reaches upward into the holding container and is mechanically constrained to share in the rotation of the discharge feeder element, so as to prevent the formation of bridges and air cavities in the powder in the holding container.

Preferably, the rotary shaft that holds the discharge feeder element as well as the recirculating device with its aforementioned elements is kept centered on the longitudinal axis by a rotary guide element that is solidly connected to the shaft and has arms comparable to wheel spokes or propeller blades whose tips are in gliding contact with the inside wall of the metering head.

The discharge feeder element in preferred embodiments of the inventive powder-metering device is configured in the shape of an auger, i.e., a helically fluted slender cylinder which, as it turns about its longitudinal axis, moves the powder towards the discharge orifice. This type of discharge feeder element is often referred to as an Archimedean screw or a feed screw.

Preferably, the metering head is equipped with a substantially cylindrical shutter valve element which is rotatably seated in a horizontal bore in the bottom part of the metering head and cooperates with the discharge orifice so as to form an aperture passage of variable size.

In preferred embodiments of the inventive powder-metering device, the discharge orifice is configured as a triangular opening at the bottom of the metering head. In specific examples, the center of the triangular opening can be offset from the longitudinal axis of the metering head by an amount that is less than half of the height of the triangle.

In a typical application, the inventive powder-metering device is used in an automated filling system. A robotic handling device picks up a powder-metering device from a holding location and moves it into its working position above a receiving container, which may be positioned on a weighing device. The robot couples the axle of the discharge feeder element and recirculating device to a drive source and the shutter device to a shutter actuator. The shutter actuator controls the dispensing rate and the shut-off point of the powder delivery in accordance with feedback signals received from the weighing device.

Alternatively, instead of setting the receiving container on a weighing device, the automated filling system could employ any other suitable means for sensing the fill level of the receiving container, for example an optical sensor that sends a feedback signal to the powder-metering device when the fill level in the receiving container reaches a target level.

Preferred embodiments of the invention are hereinafter described in further detail with references to the attached drawings, wherein
- Figure 1: illustrates a powder-metering device according to the invention in a perspective view;
- Figure 2: shows the device of Figure 1 in a cross-sectional view in a plane containing the central longitudinal axis;
- Figure 3: represents an enlarged detail of Figure 2;
- Figure 4: represents a detail view of another embodiment of a powder-metering device according to the invention; and
- Figure 5: illustrates a powder-filling system which incorporates the powder-metering device according to the invention.

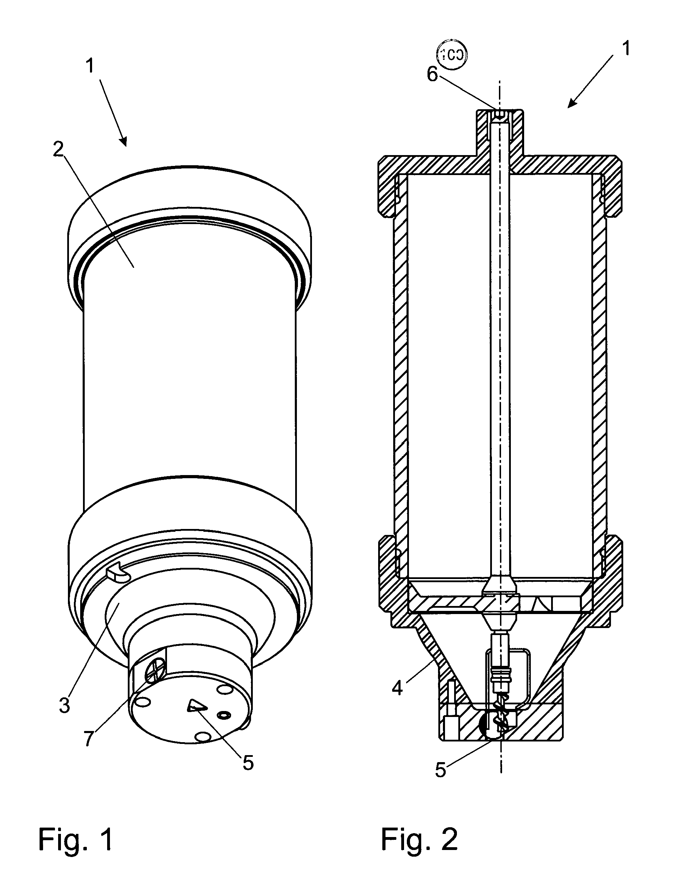

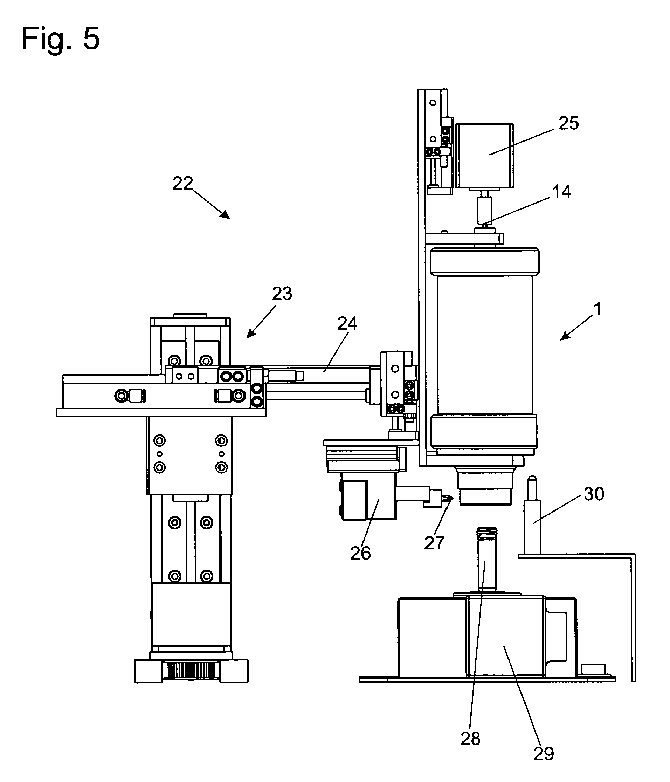

Figures 1, 2 and 3 represent, respectively, a three-dimensional view from the outside, a cross-sectional view, and an enlarged detail view of a powder-metering device 1 according to the invention in an example that is typical for the general configuration, size and appearance. The powder-metering device 1 has a holding container 2 and, permanently or releasably connected to the latter, a metering head 3 which has a housing 4 with a discharge orifice 5. In the working position of the powder-metering device 1, for example in a powder-filling system 22 (see Figure 5), the holding container 2 is on top and the metering head 3 is at the bottom. The metering head 3 is equipped with a discharge feeder element 8 - configured in this example as an Archimedean screw - which is arranged so that it can rotate about the central longitudinal axis 9 of the powder-metering device 1. In particular, the metering head 3 in the powder-metering device 1 according to the invention is equipped with a recirculating device 10 which rotates about the central longitudinal axis 9 and introduces a flow pattern R of the powder in the metering head so that powder which is not expelled by the discharge feeder element 8 through the discharge orifice 5 is directed radially outward and upward from the discharge feeder element 8 on a circulatory path R that returns the same powder for a new approach to the discharge feeder element 8.

A recirculating device 10 according to the invention has at least one first stirrer element 11 configured substantially as a thin rod or pin that extends parallel at a narrow distance d along the entire length of the discharge feeder element 8, so that in its rotation about the central longitudinal axis 9, the first stirrer element 11 sweeps a cylindrical space surrounding the discharge feeder element 8.

In preferred embodiments of the invention, the narrow distance d of the first stirrer element 11 from the discharge feeder element 8 is substantially in a range between 0.5 and 2 millimeters.

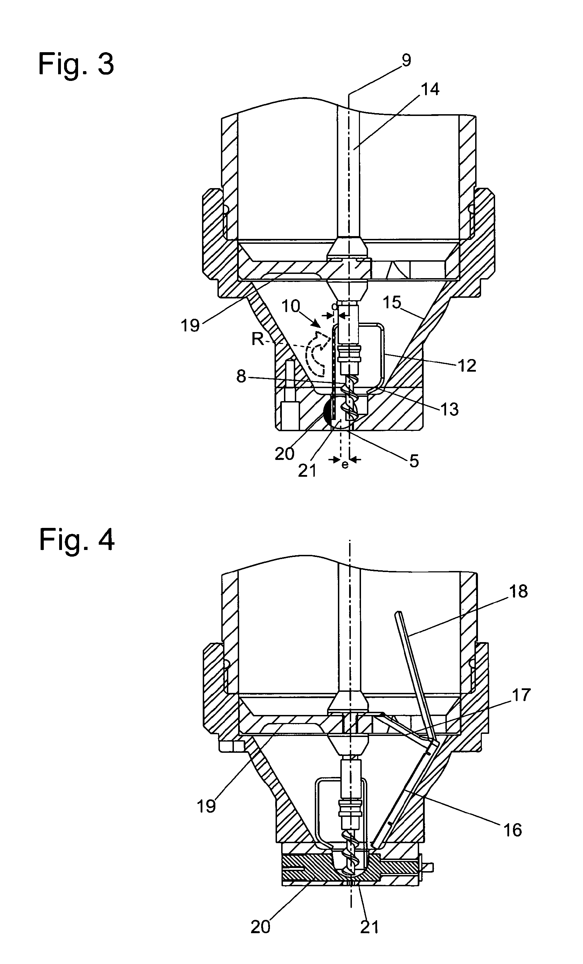

As can be seen in Figure 3, the lower ends of the discharge feeder element 8 and the first stirrer element 11 reach into the shutter element 20 which is arranged inside the horizontal bore 21 and which is rotatable to open and shut the discharge orifice 5 when coupled to and driven by a rotary actuator 26 (see Figure 5) by way of the coupling element 7 (shown in Figure 1 as crossed grooves to be driven by a shutter actuator 26 (see Figure 5) through a driver device 27 (configured in this example like a Phillips screwdriver bit).

In a preferred embodiment of the inventive powder-metering device 1, the recirculating device 10 is arranged on a shaft 14 which connects the discharge feeder element 1 to a drive source 25 (see Figure 5) through a coupling element 6 (see Figure 1). The recirculating device 10 can be rigidly connected to the shaft 14 so that the recirculating device 10 rotates together with the discharge feeder element 8. Alternatively, the recirculating device 10 can be arranged to rotate about the shaft at a rate and/or sense of rotation different from the discharge feeder element 8. In either case, the rates of rotation for the discharge feeder element 8 and the recirculating device 10 can be fixed or variable from 0 rpm to about 200 rpm.

In a further preferred embodiment of the inventive powder-metering device 1, the recirculating device 10 has in addition to the first stirrer element 11 at least one second stirrer element 12 which rotates together with the first stirrer element 11 about the central longitudinal axis 9. The second stirrer element 12 is likewise configured as a thin rod or pin that extends substantially parallel to the central longitudinal axis 9 along the discharge feeder element 8, but on the diametrically opposite side and at a larger distance from the discharge feeder element 10 than the first stirrer element 11. The free end 13 of the second stirrer element 12 is angled radially inwards so as to conform to and sweep along the bottom of the conical inside wall 15 of the housing 4 of the metering head 3.

Preferably, the rotary shaft 14 that holds the discharge feeder element as well as the recirculating device with its aforementioned elements is kept centered on the longitudinal axis by a rotary guide element 19 (identified in Figure 4, but also shown in Figures 2 and 3) that is solidly connected to the shaft 14 and has arms comparable to wheel spokes or propeller blades whose tips are in gliding contact with the conical inside wall 15 of the housing 4 of the metering head 3.

Alternatively or in addition to the first stirrer element 11 and/or second stirrer element 12, the recirculating device 10 in further preferred embodiments of the invention as shown for example in Figure 4 can include a wiper element 16 configured substantially like a windshield wiper blade, which conforms to the cone angle of the inside wall 15 of the housing 4 of the metering head 3 and is fixedly connected by a connector arm 17 to the axle shaft 14 of the discharge feeder element 8 so as to share in the rotation of the latter and wipe the conical inside wall 15 of the housing 4 of the metering head 3. As an alternative (not shown) the wiper element 16 can also be connected to one of the arms of the rotary guide element 19.

In addition to the wiper element 16, the recirculating device 10 in further preferred embodiments of the invention can also include a loosening element 18 (shown for example in Figure 4) which can be configured as a rod that reaches upward into the holding container and is rigidly connected either to the connector arm 17 or to one of the arms of the rotary guide element 19, thus participating in the rotation of the shaft 14 with the discharge feeder element 8, so as to prevent the formation of bridges and air cavities in the powder in the holding container 2.

The discharge feeder element 8 in preferred embodiments of the inventive powder-metering device 1 is configured in the shape of an auger, i.e., a helically fluted slender cylinder which, as it turns about its longitudinal axis 9, moves the powder towards the discharge orifice 5.

Preferably, the metering head 3 is equipped with a substantially cylindrical shutter valve element 20 which is rotatably seated in a horizontal bore 21 in the bottom part of the metering head 3 and cooperates with the discharge orifice 5 so as to form an aperture passage of variable size.

In preferred embodiments of the inventive powder-metering device 1, the discharge orifice 5 is configured as a triangular opening (as shown in Figure 1) at the bottom of the metering head. In specific examples, the center of the triangular opening can be offset from the longitudinal axis 9 of the metering head 3 by an amount e that is less than half of the height of the triangle.

In a typical application, the inventive powder-metering device 1 can be used for example in an automated filling system 22 as shown in Figure 5. A robotic handling device 23 with an arm 24 picks up a powder-metering device 1 from a holding location and moves it into its working position above a receiving container 28, which may be positioned on a weighing device 29. The robot 23 couples the axle shaft 14 of the discharge feeder element 1 and recirculating device 10 to a drive source 25 and engages the drive element 27 of the shutter actuator 26 with the coupling element 7 of the rotary shutter element 20. The shutter actuator 26 controls the aperture of the discharge orifice 5 and thereby controls the dispensing rate and shut-off point of the powder delivery in accordance with feedback signals received from the weighing device 29.

Alternatively, instead of setting the receiving container 28 on a weighing device 29, the automated filling system 22 could employ any other suitable means for sensing the fill status of the receiving container 28, for example an optical sensor (not shown) that sends a feedback signal to the powder-metering device when the fill level in the receiving container 28 reaches a target level.

Even though the invention has been described through the presentation of specific embodiments, those skilled in the pertinent art will recognize numerous possibilities for variations and alternative embodiments, for example by combining and/or exchanging features of individual embodiments either with each other or with further features that belong to the known state of the art. To name only one example, it is considered self-evident that a powder-metering device according to any of the embodiments described herein could in addition be equipped with one of the vibrating or tapping devices known under the present state of the art, for example a tapping device 30 as symbolically indicated in Figure 5. Accordingly, it will be understood that such variations and alternative embodiments are considered as being included in the present invention and that the scope of the invention is limited only by the attached patent claims and their equivalents.

### List of Reference Symbols

- 1: powder-metering device
- 2: holding container
- 3: metering head
- 4: housing of metering head
- 5: discharge orifice
- 6: coupling element for drive source
- 7: coupling element for shutter actuator
- 8: discharge feeder element
- 9: central longitudinal axis
- 10: recirculating device
- 11: first stirrer element
- 12: second stirrer element
- 13: free end of second stirrer element
- 14: shaft
- 15: internal conical wall
- 16: wiper element
- 17: connector arm
- 18: powder-loosening element
- 19: arm of rotary guide element
- 20: shutter element
- 21: horizontal bore
- 22: powder-filling system
- 23: robotic handling device
- 24: handling arm
- 25: drive source for discharge feeder element and recirculating device
- 26: rotary actuator for shutter device
- 27: drive element for shutter device
- 28: receiving container
- 29: weighing device for receiving container
- 30: tapping device
- d: distance between discharge feeder element and first stirrer element
- e: offset of center of discharge orifice from central longitudinal axis
- R: recirculating powder flow pattern

## Claims

1. A powder-metering device (1) comprising a holding container (2) and, permanently or releasably connected to the latter, a metering head (3) which has a housing (4) with a discharge orifice (5) and which is equipped with a discharge feeder element (8) arranged on a shaft (14) with a central longitudinal axis (9) and rotatable in relation to the housing (4) about said central longitudinal axis (9), **characterized in that** the metering head (3) in the powder-metering device (1) comprises a recirculating device (10) which rotates about the central longitudinal axis (9) and thereby introduces a flow pattern (R) in the powder in the metering head (3) so that powder which is not expelled by the discharge feeder element (8) through the discharge orifice (5) is directed radially outward and upward from the discharge orifice (5) on a circulatory path (R) that returns the same powder for a new approach to the discharge feeder element (8).

2. The powder-metering device (1) according to claim 1, **characterized in that** the recirculating device (10) comprises at least one first stirrer element (11) configured as a thin rod which extends parallel to the longitudinal axis (9) at a narrow distance (d) essentially along the entire length of the discharge feeder element (8), said first stirrer element (11) being rotatable about the central longitudinal axis (9), so that in its rotation about the central longitudinal axis (9), the first stirrer element (11) sweeps a cylindrical space surrounding the discharge feeder element (8).

3. The powder-metering device (1) according to claim 2, **characterized in that** said distance (d) is between 0.5 and 2 millimeters.

4. The powder-metering device (1) according to one of the claims 1 to 3, **characterized in that** the recirculating device (10) is arranged on a shaft (14) which connects the discharge feeder element (8) to a drive source (25), wherein the recirculating device (10) is rigidly connected to the shaft (14) so that the recirculating device (10) rotates at the same rate and same sense of rotation as the discharge feeder element (8) about the central longitudinal axis (14).

5. The powder-metering device (1) according to one of the claims 1 to 3, **characterized in that** the recirculating device (10) is arranged on a shaft (14) which connects the discharge feeder element (8) to a drive source (25), wherein the recirculating device (10) is arranged to rotate about the central longitudinal axis (14) at a rate and/or sense of rotation different from the discharge feeder element (8).

6. The powder-metering device (1) according to claim 4 or 5, **characterized in that** the rate of rotation for the discharge feeder element (8) and the recirculating element (10) are of a fixed or variable magnitude from 0 rpm to about 200 rpm.

7. The powder-metering device (1) according to any of the claims 2 to 6, **characterized in that**, in addition to the first stirrer element (11), the recirculating device (10) comprises at least one second stirrer element (12) constrained to rotate together with the first stirrer element (11) about the central longitudinal axis (9), wherein the second stirrer element (12) is likewise configured as a thin rod that extends substantially parallel along the discharge feeder element (8), but on the diametrically opposite side and at a larger distance from the discharge feeder element (10) than the first stirrer element (11), and wherein the free end (13) of the second stirrer element (12) is angled radially inwards so as to conform to and sweep along the bottom of the inside wall (15) of the housing (4) of the metering head (3).

8. The powder-metering device (1) according to any of the preceding claims 1 to 7, **characterized in that** the recirculating device (10) further comprises a wiper element (16) in the form of a wiper blade which conforms to the inner surface (15) of the housing (4) of the metering head (3) and is fixedly connected by a connector arm (17) to the shaft (14) of the discharge feeder element (8) so as to participate in the rotation of the shaft (14) and to wipe said inner surface (15).

9. The powder-metering device (1) according to claim 8, **characterized in that** the recirculating device (10) further comprises a powder-loosening element (18) configured substantially as a rod that reaches upward into the holding container (2) and rotates together with the wiper element (16) in order to stir the powder in the holding container and thereby prevent the formation of lumps, bridges and air cavities in said powder in the holding container (2).

10. The powder-metering device (1) according to any of the preceding claims 1 to 9, **characterized in that** the rotary shaft (14) is kept centered on the longitudinal axis (9) by a rotary guide element (19) that is solidly connected to the shaft (14) and has arms comparable to wheel spokes whose tips are in gliding contact with the inside wall of the metering head (3).

11. The powder-metering device (1) according to any of the preceding claims 1 to 10, **characterized in that** the discharge feeder element (8) is configured in the shape of an auger which, as it turns about its longitudinal axis (9), pushes the powder towards the discharge orifice (5).

12. The powder-metering device (1) according to any of the preceding claims 1 to 11, **characterized in that** the metering head (3) comprises a substantially cylindrical shutter valve element (20) which is rotatably seated in a essentially horizontal bore (21) in the bottom part of the metering head (3) and cooperates with the discharge orifice (5) so as to form an aperture passage of variable size.

13. The powder-metering device (1) according to claim 12, **characterized in that** the discharge orifice (5) is configured as a triangular opening in the bottom of the metering head (3).

14. The powder-metering device (1) according to claim 13, **characterized in that** the center of the triangular opening is offset from the longitudinal axis (9) of the metering head (3) by an amount (e) that is less than one-half of the height of the triangle.

15. Powder-filling system (22) comprising a robotic handling device (23) with a handling arm (24), a rotary drive source (25), and a shutter-control actuator (26), **characterized in that** said handling arm (24) is operable to transport a powder-metering device (1) according to any of the preceding claims 1 to 14 from a storage location to a working position above a receiving container (28), to couple the powder-metering device (1) to said rotary drive source (25), to couple the shutter-control actuator (26) to the rotary shutter element (20), and to discharge powder from said powder-metering device (1) into said receiving container (28).

16. The powder-filling system (22) according to claim 15, further comprising a weighing device (29), **characterized in that** in its working position, the receiving container (28) is resting on the weighing device (29) and the shutter-control actuator (26) controls the dispensing rate and the shut-off point of the powder delivery in accordance with feedback signals received from the weighing device (29).

17. The powder-filling system (22) according to claim 15, further comprising a fill level sensor device, **characterized in that** when the receiving container (28) is in a working position below the powder-metering device 1, said fill level sensor device monitors the rising fill level in the receiving container (28) and the shutter-control actuator (26) controls the dispensing rate and the shut-off point of the powder delivery in accordance with feedback signals received from the fill level sensor.
